# EUROPÄISCHE PATENTSCHRIFT

(11) **EP 1 643 604 B1**
(45) Veröffentlichungstag und Bekanntmachung des Hinweises auf die Patenterteilung: **06.06.2007**
(21) Anmeldenummer: 05020626.7
(22) Anmeldetag: 22.09.2005
(51) Int. Cl.: H02G 3/08, H02G 15/013

(54) **Vorrichtung zum flüssigkeits-oder gasdichten gegenseitigen Abgrenzen zweier Räume**
Device for gas or fluid sealing between two adjacent rooms
Dispositif d'étanchéité à l'égard de gaz ou de fluides entre deux pièces adjacentes

(30) Priorität: 02.10.2004 DE 102004048154
(43) Veröffentlichungstag der Anmeldung: 05.04.2006
(73) Patentinhaber: Hauff-Technik GmbH & Co. KG, 89542 Herbrechtingen (DE)
(72) Erfinder: Kurz, Ralf, 89537 Giengen (DE)
(74) Vertreter: Dr. Weitzel & Partner

(56) Entgegenhaltungen:
- US-A- 4 662 692

## Beschreibung

Die Erfindung betrifft eine Dichtungsvorrichtung, mit welcher zwei Räume gegeneinander abgetrennt oder abgegrenzt werden können. US-A-4 662 692 beschreibt eine solche Vorrichtung. Diese Schrift bildet den Oberbegriff von Anspruch 1.

Solche Vorrichtungen werden bei sogenannten Hauseinführungskombinationen angewandt. Diese werden dann eingesetzt, wenn eine Leitung durch eine Wand hindurchgeführt wird. Die Wand ist beispielsweise die Außenwand eines Hauses. Der eine der beiden Räume ist dann ein Innenraum des Hauses, und der andere Raum ist die äußere Umgebung. Die Wand weist eine Bohrung auf, die gegenüber dem Querschnitt der Leitung Übermaß hat, so dass zwischen der Leitung und der Laibung der Bohrung ein Ringraum verbleibt. Der Ringraum muss ausgefüllt werden, da er sonst eine leitende Verbindung zwischen den beiden Räumen darstellen würde, was unerwünscht ist. Der Ringraum wird ausgefüllt mit einem elastischen Körper, beispielsweise mit einem Ringkörper aus Gummi. Der Ringkörper aus Gummi umschließt die Leitung und liegt seinerseits selbst mit seiner äußeren Mantelfläche an der Laibung der Bohrung an. Durch axiales Stauchen wird der Gummi-Ringkörper an die Laibung der Bohrung angepresst.

Zum Ausfüllen des Ringraumes kann aber auch eine Gelmasse verwendet werden. Dabei wird die Gelmasse in die Bohrung eingebracht. Die Gelmasse bildet sodann einen Gelpfropfen, der satt an der Laibung der Bohrung anliegt. Sodann wird die Leitung durch die Gelmasse hindurchgestoßen. Die Gelmasse umschließt dann die Leitung. Damit ist zum einen die Leitung in der Bohrung fixiert, und zum anderen ist auch eine Abtrennung oder Abgrenzung zwischen den beiden Räumen hergestellt.

Das Einbringen einer Gelmasse hat somit den Vorteil der großen Einfachheit. Es hat jedoch den folgenden Nachteil: Stößt man die Leitung durch die Gelmasse hindurch, so bleibt die Gelmasse an der äußeren Mantelfläche der Leitung kleben, und es wird ein Teil der Gelmasse von der Leitung bei dessen axialer Durchstoßbewegung mitgeschleppt. Dies ist deshalb unerwünscht, weil damit dem Gelpfropfen Gelmasse entzogen wird, so dass nicht mehr genügend Gelmasse in der Bohrung vorhanden ist und damit auch kein zuverlässiges dichtes und festes Einspannen der Leitung in der Bohrung gewährleistet ist. Der Mitnahmeeffekt kann sogar so weit gehen, dass der gesamte Gelpfropfen bei der Bewegung des Leiters durch die Bohrung hindurch aus der Bohrung herausgezogen wird.

Man könnte daran denken, auf der Austrittsseite des Gelpfropfens, das heißt dort, wo die Leitung austritt, eine Platte aus Metall aufzubringen, mit einer Bohrung zum Hindurchführen der Leitung. Jedoch müsste die Bohrung der Metallplatte gegenüber der Leitung ein gewisses Übermaß aufweisen. Es entstünde somit ein Ringspalt, durch den wiederum Gel austritt, so dass das Problem nach wie vor bestünde.

Der Erfindung liegt die Aufgabe zugrunde, eine Vorrichtung gemäß dem Oberbegriff von Anspruch 1 derart zu gestalten, dass die Vorteile von Gelmaterial erhalten bleiben, die Nachteile aber vermieden werden. Es soll somit verhindert werden, dass Gelmasse beim Hindurchstoßen einer Leitung in Bewegungsrichtung der Leitung mitgeschleppt wird.

Diese Aufgabe wird durch die kennzeichnenden Merkmale von Anspruch 1 gelöst. Dem gemäß wird die Gelmasse wenigstens auf einer ihrer Grenzflächen mit einer Haut versehen, insbesondere auf jener Grenzfläche, aus der die Leitung beim Hindurchstoßen aus der Gelmasse austritt. Die Haut verhindert ein Mitschleppen von Gelmasse über diese Grenzfläche hinaus.

Dies bedeutet natürlich, dass die Haut eine gewisse Elastizität oder Festigkeit oder Zähigkeit oder Reißfestigkeit haben muss. Das Material der Haut muss - genauso wie die Gelmasse - das Bestreben haben, beim Durchstoßen einer Leitung ihre ursprüngliche Form beizubehalten, somit die Leitung fortwährend eng umschließen, und damit verhindern, dass Gelteilchen von der Mantelfläche der Leitung mitgeschleppt werden.

Als Hautmaterial kommen zahlreiche Werkstoffe in Betracht. So könnte beispielsweise eine Gummihaut vorgesehen werden. Auch käme eine Folie in Betracht, so wie beispielsweise bei Gartenteichen verwendet. Ideal aber ist eine gel-eigene Haut, das heißt eine Haut, die wiederum aus einem Gel besteht, vielleicht aus demselben Gel, wie die Hauptmasse des Gelkörpers.

Auf jeden Fall muss die Haut mit dem (übrigen) Gelkörper innig verbunden sein, so dass sie am Haupt-Gelkörper verbleibt und nicht etwa durch Reibung an der Mantelfläche der Leitung mitgeschleppt wird.

Die gel-eigene Haut kann durch physikalische oder chemische Einwirkung gebildet werden, so dass man sie gar nicht als Fremdkörper identifizieren kann.

Die Haut muss sich nicht unbedingt über die gesamte Grenzfläche des Körpers hinwegerstrecken. Die Hauptsache ist, dass sie sich dort befindet, wo eine Leitung durch den Körper hindurchgestoßen wird. Im Extremfall kann die Haut lediglich in einem Ringbereich die Leitung umschließen, das heißt selbst die Gestalt eines Ringes haben, der natürlich mit dem übrigen Gelkörper untrennbar verbunden oder mit diesem einteilig ist.

Die Erfindung ist anhand der Zeichnung näher erläutert. Darin ist im Einzelnen folgendes dargestellt:
- Figur 1: zeigt einen Körper, durch den ein langgestreckter Körper, beispielsweise ein Stab, hindurchgestoßen werden soll, und zwar vor dem Hindurchstoßen des Stabes.
- Figur 2: zeigt den Gegenstand von Figur 1 mit dem Stab im Stadium des Hindurchstoßens.
- Figur 3: zeigt den Gegenstand von Figur 1 nach dem Hindurchstoßen und Hindurchführen des Stabes gemäß Figur 2.
- Figur 4a: veranschaulicht einen weiteren Anwendungsfall, bei welchem eine Leitung durch einen Gelkörper sowie durch eine Behälterwand hindurchgeführt ist.
- Figur 4b: zeigt den Gegenstand von Figur 1 in einer Draufsicht mit geschnittenen Leitungen.
- Figur 5a: zeigt eine weitere Anwendungsform ähnlich jener gemäß Figur 4a.
- Figur 5b: zeigt den Gegenstand von Figur 5a in einer Draufsicht, wiederum mit geschnittenen Leitungen.
- Figur 6a: zeigt einen Behälter, durch dessen eine Wand eine Leitung hindurchgeführt ist.
- Figur 6b: zeigt einen Horizontalschnitt durch den Gegenstand von Figur 6a.
- Figur 7: zeigt eine sogenannte Hauseinführungskombination in einem Vertikalschnitt.
- Figur 8: zeigt eine Wandung, durch welche drei Leitungen hindurchgeführt sind.
- Figur 9: zeigt eine Anwendung mit einer Wandung, durch welche eine Stützhülse hindurchgeführt ist, die ihrerseits eine Leitung umschließt.

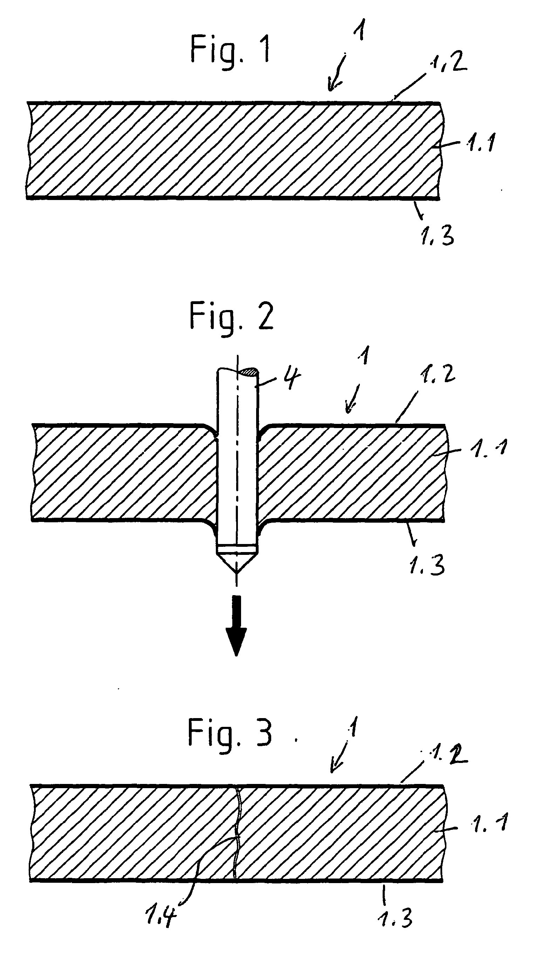

In Figur 1 erkennt man einen Gelkörper 1. Dieser umfasst einen Gelkern 1.1, ferner eine gel-eigene Haut 1.2 auf der einen Seite und eine gel-eigene Haut 1.3 auf der anderen Seite des Gelkerns 1.1.

Unter der Bezeichnung "Gel" wird ein chemisch oder physikalisch verknüpftes Polymernetzwerk verstanden, welches in einem Medium in beliebigem Stoffzustand gequollen ist. Es besteht aus mindestens zwei Komponenten, die mehr oder weniger kontinuierlich im vorhandenen Volumen verteilt sind.

Durch die Art der Verknüpfungspunkte, die in einem Netzwerk vorliegen, stellt man unterschiedliches Quellverhalten von Gelen fest:
- Bei physikalisch verknüpften Netzwerken wird im Allgemeinen ein Gel-Sol-Übergang festgestellt. In Abhängigkeit von der Temperatur und/oder der Quellmittelmenge bildet das Polymer ein Gel, kann aber auch ohne Zerstörung der einzelnen Polymerketten in den Solzustand gebracht werden. Das Polymer-Quellmittel-System bildet dann eine Lösung. Dieser Vorgang ist reversibel, weshalb diese Gele auch als "thermoreversible Gele" bezeichnet werden.
- Bei chemisch verknüpften Netzwerken hingegen ist ein Gel-Sol-Übergang lediglich unter irreversiblem Abbau der Netzwerkstruktur zu erreichen. Das Netzwerk ist nur bis zu einem bestimmten Grad in der Lage, Quellmittel aufzunehmen, dem sogenannten Sättigungs- oder Gleichgewichts-Quellungsgrad.

Im Gelzustand eines chemisch verknüpften Netzwerkes bleibt die äußere Form des Netzwerkes sowie die Gummi-Elastizität beibehalten. Physikalisch betrachtet besitzt ein Gel sowohl elastische als auch Viskoseeigenschaften. Es ist somit viskoelastisch. Der Gelzustand wird auch bei glasig erstarrten Netzwerken unterhalb ihrer Glastemperatur mit einem geeigneten Quellmittel gebildet.

In Figur 2 erkennt man wiederum den Gelkörper 1 gemäß Figur 1 mit einem hindurchgestoßenen Stab 4. Statt des Stabes könnte auch eine Leitung hindurchgeführt sein. Der Pfeil gibt die Richtung des Hindurchstoßens an.

Wie man sieht, ist sowohl die Gelhaut 1.2 als auch die Gelhaut 1.3 vom Stab 4 um ein gewisses Maß mitgenommen - siehe an beiden Gelhäuten den Meniskus. Die Mitnahme ist jedoch gering, verglichen mit einem Gelkörper ohne eine solche Haut. Der Grund liegt darin, dass die Gelhaut 1.2 beziehungsweise 1.4 derart stramm den Stab 4 umschließt, dass Gel aus dem Gelkern nicht in nennenswertem Maße von der Mantelfläche des Stabes 4 mitgeschleppt werden kann. Das Material der Gelhaut 1.2 beziehungsweise 1.3 kann eine höhere elastische Kraft aufbringen, als das Material des Gelkerns 1.1.

Figur 3 veranschaulicht jenen Zustand, bei welchem der Stab 4 durch den Gelkörper 1 völlig hindurchgeführt und herausgeführt ist. Man erkennt noch einen Lunker 1.4, dessen Durchmesser jedoch äußerst gering ist. Der Lunker 1.4 verschwindet jedoch nach kurzer Zeit völlig oder fast völlig, insbesondere dann, wenn in radialer Richtung Druck auf den Gekörper 1 ausgeübt wird.

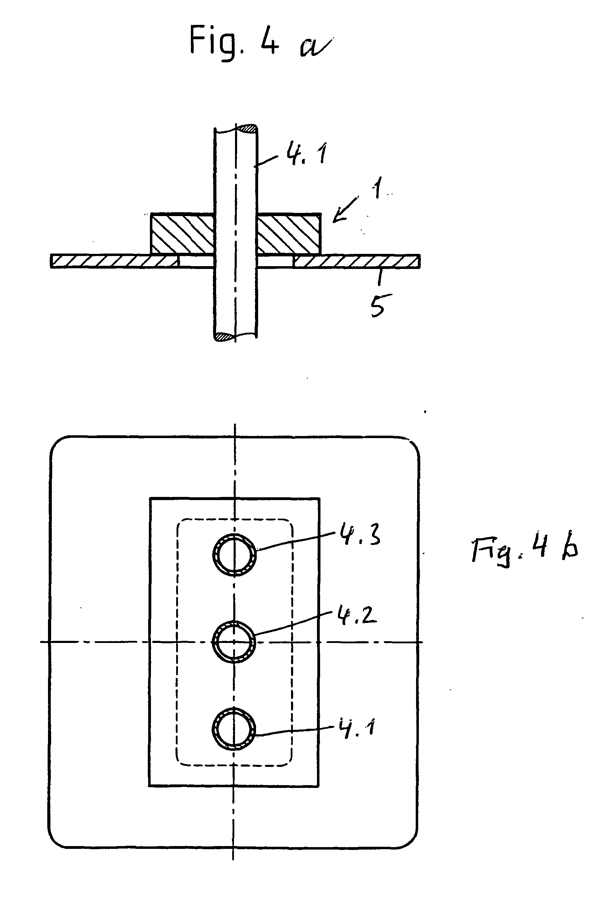

Bei der Ausführungsform gemäß der Figuren 4a und 4b sind drei Rohrleitungen 4.1, 4.2 und 4.3 durch einen Gelkörper 1 hindurchgeführt. Der Gelkörper hat die Gestalt eines Quaders. Er liegt auf einer Wand 5 auf. Die Wand 5 kann aus einem dünnen Blech bestehen. Gelkörper 1 umfasst wiederum einen Gelkern 1.1 sowie eine gel-eigene Haut 1.2, die die eine Seitenfläche des Gelkörpers 1 bildet, und eine gel-eigene Haut 1.3, die die andere Seite bildet. Dabei könnte es ausreichen, nur eine einzige Seite des Gelkerns 1.1 mit einer gel-eigenen Haut zu versehen, nämlich die Unterseite, auf welcher die Leitungen 4.1, 4.2, 4.3 beim Durchstoßen des Gelkörpers 1 austreten.

Die Wand 5 weist eine Bohrung 5.1 auf.

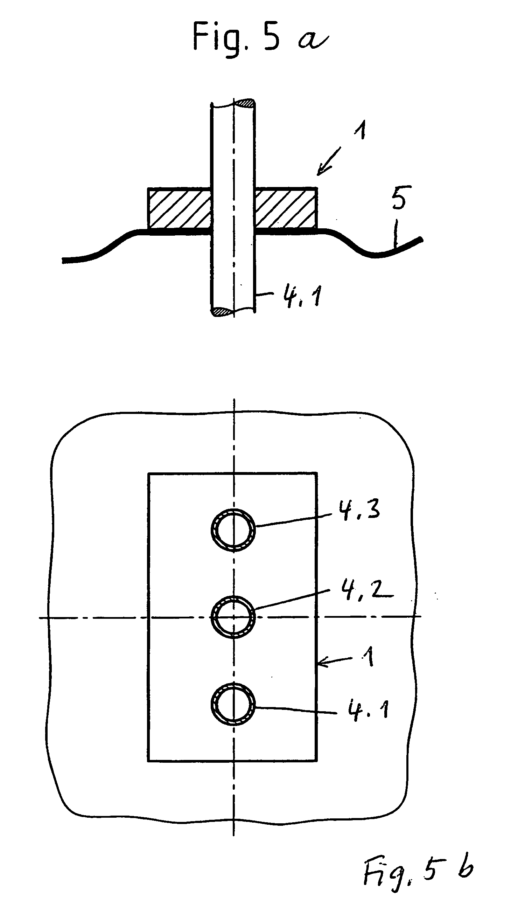

Figuren 5a und 5b zeigen eine Ausführungsform, die ganz ähnlich wie jene gemäß der Figuren 4a und 4b ist. Die Wand 5 besteht hierbei aus einer Folie oder einer Membran, die z. B. aus Gummi oder Kunststoff besteht.

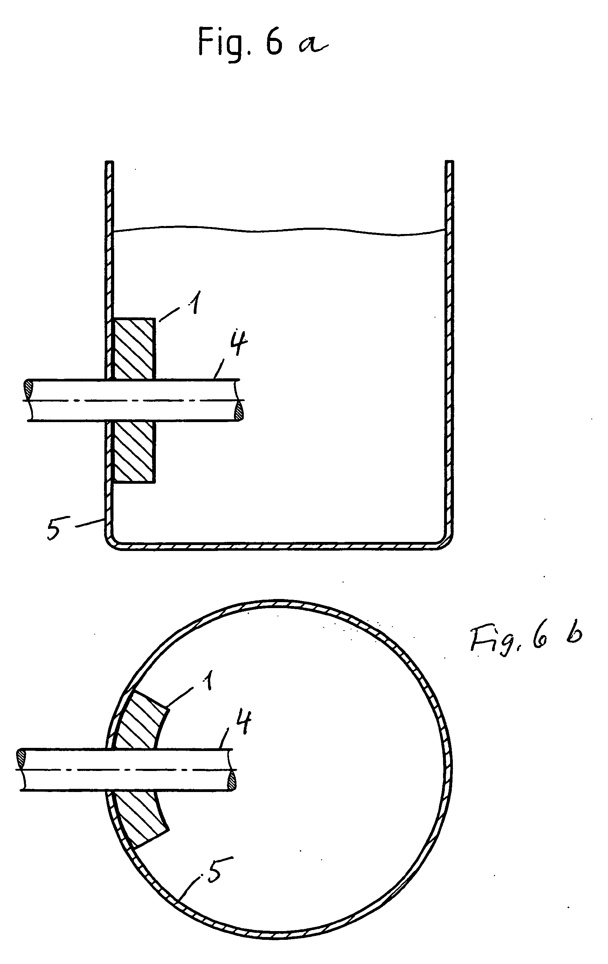

In Figur 6 ist wiederum eine Leitung 4 durch einen Gelkörper 1 und durch eine Behälterwand 5 hindurchgeführt.

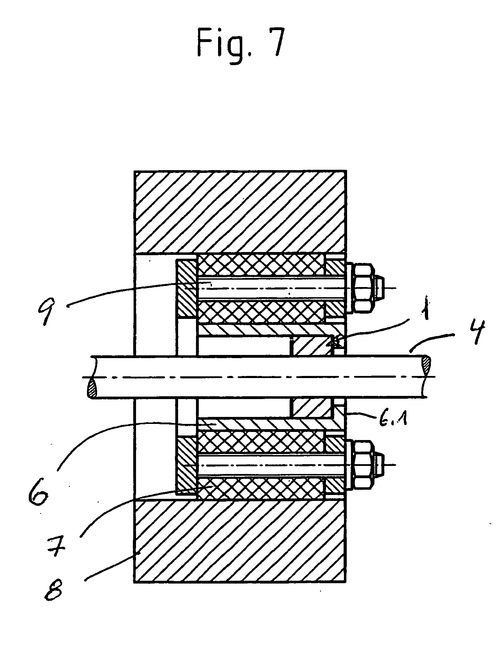

Bei der Ausführungsform gemäß Figur 7 erkennt man im Einzelnen folgendes: Eine Leitung 4 ist durch einen Gelkörper 1 hindurchgeführt, indem dieser durchstoßen wurde, und zwar in Richtung von links nach rechts. Gelkörper 1 sitzt in einer Aufnahmehülse 6. Die Aufnahmehülse 6 ist von einem Gummiring 7 umschlossen. Gummiring 7 ist von einer Buchse 8 umschlossen. Gummiring 8 lässt sich durch Anziehen von mehreren Schrauben 9 in Axialrichtung stauchen, wobei er sich in radialer Richtung ausdehnt und damit die Aufnahmehülse 6 fest einspannt. Statt der Buchse 8 kann man sich auch eine Wand eines Gebäudes vorstellen, die mit einer Bohrung zum Einbringen des Gummiringes versehen ist.

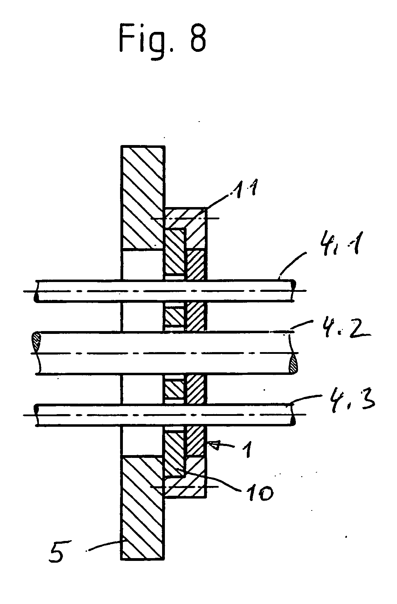

Figur 8 zeigt eine weitere Ausführungsform. Hierbei sind wiederum drei Leitungen 4.1, 4.2 und 4.3 unterschiedlicher Durchmesser durch eine Bohrung in einer Wand 5 hindurchgeführt. Dabei ist ein Gelkörper 1 vorgesehen, wiederum aufgebaut aus einem Gelkern 1.1, sandwichartig eingeschlossen zwischen einer gel-eigenen Haut 1.2 und einer gel-eigenen Haut 1.3. Zwischen Gelkörper.1 und Wand 5 befindet sich eine perforierte Stützplatte 10. Ein Haltering 11 ist an der Wand 5 fixiert. Er umschließt die Stützplatte 10, indem er an deren Umfangsfläche sowie am Umfangsbereich ihrer einen Seitenfläche anliegt. Gleichzeitig umschließt er den Gelkörper 1.

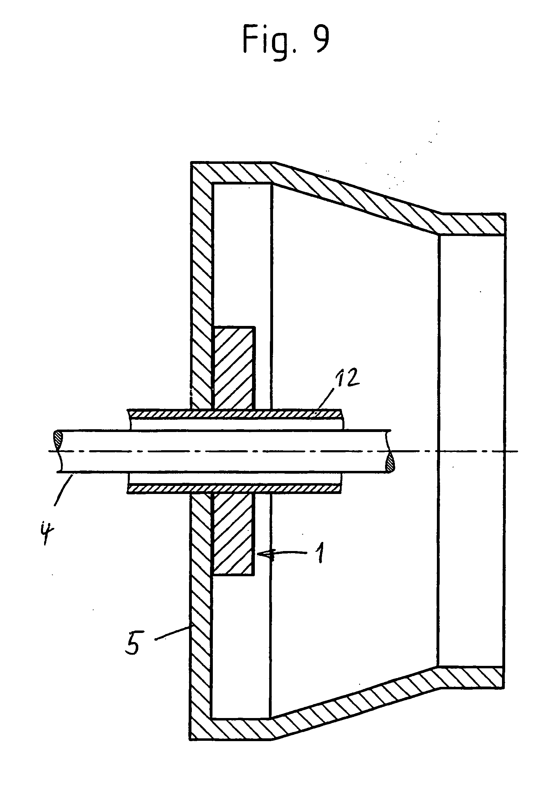

Die Ausführungsform gemäß Figur 9 ist besonders interessant. Man erkennt hierbei wiederum eine Leitung 4, einen Gelkörper 1 mit Gelkern 1.1 und gel-eigener Haut 1.2 und 1.3 sowie einen Behälter mit Behälterwand 5. Das Besondere an dieser Ausführungsform ist ein Hüllrohr 12. Zum Montieren der gesamten Baueinheit geht man dabei wie folgt vor: Gelkörper 1 wird auf der einen Seite der Wand 5 aufgelegt und an dieser fixiert, beispielsweise durch Verkleben. Sodann wird das Hüllrohr 12 von rechts her nach links durch den Gelkörper 1 hindurchgestoßen oder geschoben. Nunmehr wird die Leitung 4 durch das Hüllrohr 12 hindurchgeführt. Sodann kann das Hüllrohr 12 aus dem Gelkörper 1 und auch aus der Wand 5 herausgezogen werden. Aufgrund der Elastizität des Gelmaterials schrumpft der Gelkörper zusammen, so dass er zuverlässig dichtend die Leitung 4 umschließt. Das Hüllrohr 12 kann auf diese Weise bei mehreren Montagevorgängen nacheinander verwendet werden.

Bei den Ausführungsformen gemäß der Figuren 4.a und 4.b, 5.a und 5.b, 6 und 9 ist der Gelkörper 1 mit der Wand verklebt. Bei der Ausführungsform gemäß Figur 7 liegt die eine Seite des Gelkörpers 1, erfindungsgemäß aus einer Haut gebildet, an einem Bund 6.1 der Aufnahmehülse 6 an und ist mit diesem Bund verklebt.

Bei der Ausführungsform gemäß Figur 8 ist der Gelkörper 1 mit der Stützplatte 10 verklebt.

Die Verklebbarkeit von erfindungsgemäßen Gelkörpern ist ein großer weiterer Vorteil der erfindungsgemäßen Ausführungsform. Ohne eine Haut ist nämlich ein Verkleben nicht oder nur schwer möglich. Der Gelkörper lässt sich mit jener Seitenfläche, die aus der Haut gebildet wird, leicht und zuverlässig an einer anderen Fläche festkleben, z. B. an einer Behälterwand.

Besonders günstige Gelformen sind formstabile Polyurethan-Gele. Diese zeichnen sich unter anderem durch eine besonders hohe Dehnung aus. Ihre Zugfestigkeit kann in den folgenden Grenzen gewählt werden:
Weich: 140 bis 200 kPa
Mittel: 200 bis 300 kPa
Hart: 300 bis 400 kPa.

Verwendet man als Haut eine separate Haut, die auf einen Gelkern aufgebracht wird, so haben sich Folien aus Polyuritan als günstig erwiesen. Die Haut kann auch auf den Gelkern lose aufgelegt sein.

Besonders vorteilhaft ist die Anwendung einer erfindungsgemäßen Vorrichtung bei einer sogenannten Hauseinführungskombination, so wie eingangs beschrieben.

### Bezugszeichenliste

- 1: Gelkörper
- 1.1: Gelkern
- 1.2: gel-eigene Haut
- 1.3: gel-eigene Haut
- 1.4: Lunker
- 4: Leitung oder stabförmiger Körper
- 4.1: Leitung
- 4.2: Leitung
- 4.3: Leitung
- 5: Behälterwand
- 5.1: Bohrung
- 6: Aufnahmehülse
- 7: Gummiring
- 8: Buchse
- 9: Schraube
- 10: Stützplatte
- 11: Haltering
- 12: Hüllrohr

## Patentansprüche

1. Vorrichtung zum flüssigkeits- oder gasdichten Abgrenzen zweier Räume gegeneinander;
1.1 mit einem Körper, umfassend eine erste Fläche, die die Grenzfläche zu einem ersten der beiden Räume bildet, und eine zweite Fläche, die die Grenzfläche zu dem zweiten Raum bildet;
1.2 der Körper (1) ist aus einem Gel gebildet; **gekennzeichnet durch** die folgenden Merkmale:
1.3 wenigstens ein Teil wenigstens einer der beiden Grenzflächen ist aus einer Haut (1.2, 1.3) gebildet;
1.4 die Haut (1.2, 1.3) ist mit der Gelmasse fest verbunden oder aus der Gelmasse selbst gebildet oder auf diese lose aufgelegt.

2. Vorrichtung nach Anspruch 1, **dadurch gekennzeichnet, dass** die Haut (1.2, 1.3) eine Elastizität aufweist, die zwischen der Hälfte und dem Doppelten der Elastizität der Gelmasse liegt.

3. Vorrichtung nach Anspruch 2, **dadurch gekennzeichnet, dass** die Elastizität der Haut (1.2, 1.3) zwischen dem 1 bis 2-fachen der Elastizität der Gelmasse liegt.

4. Vorrichtung nach einem der Ansprüche 1 bis 3, **dadurch gekennzeichnet, dass** die Haut eine gel-eigene Haut ist, die durch physikalisches oder chemisches Behandeln der Oberfläche eines Gelkerns gebildet ist.

5. Vorrichtung nach einem der Ansprüche 1 bis 3, **dadurch gekennzeichnet, dass** die Haut (1.2, 1.3) auf einen Gelkern (1.1) aufgebracht ist.

6. Vorrichtung nach Anspruch 5, **dadurch gekennzeichnet, dass** die haut aus einer Folie besteht.

7. Vorrichtung nach Anspruch 5 oder 6, **dadurch gekennzeichnet, dass** die Haut aus Polyuritan oder einem anderen Kunststoff besteht.

8. Hauseinführungskombination zum Hindurchführen wenigstens einer Leitung durch einen Durchbruch in einer Mauer, die bei einem Gebäude zwei Räume gasdicht oder wasserdicht gegeneinander abtrennt;
8.1 mit einer Vorrichtung zum Absperren des Zwischenraumes zwischen der Leibung des Durchbruches der Mauer und in Mantelschleichen der Rohrleitungen;
**gekennzeichnet durch** die folgenden Merkmale:
8.2 als Vorrichtung zum Absperren ist eine Vorrichtung gemäß einem der Merkmale 1 bis 7 vorgesehenen.

## Claims

1. An apparatus for delimiting two chambers against one another in a liquid-tight or gas-tight manner;
1.1. with a body comprising a first surface forming the interface to a first of the two chambers and a second surface forming the interface to the second chamber;
1.2. the body (1) is formed from a gel;
**characterized by** the following features:
1.3. at least a portion of at least one of the two interfaces is made from a skin (1.2, 1.3);
1.4. the skin (1.2, 1.3) is rigidly connected with the gel mass or is formed by the gel mass itself or is placed loosely on the same.

2. An apparatus according to claim 1, **characterized in that** the skin (1.2, 1.3) has an elasticity which lies between half and twice the elasticity of the gel mass.

3. An apparatus according to claim 2, **characterized in that** the elasticity of the skin (1.2, 1.3) lies between 1 to 2 times the elasticity of the gel mass.

4. An apparatus according to one of the claims 1 to 3, **characterized in that** the skin is a gel-own skin which is formed by physical or chemical treatment of the surface of a gel core.

5. An apparatus according to one of the claims 1 to 3, **characterized in that** the skin (1.2, 1.3) is applied to a gel core (1.1).

6. An apparatus according to claim 5, **characterized in that** the skin is made of a film.

7. An apparatus according to claim 5 or 6, **characterized in that** the skin consists of polyuritan or another plastic material.

8. A house introduction combination for guiding through at least one line through a breakthrough in a wall which seals two rooms in a gas-tight or waterproof manner in a building;
8.1. with an apparatus for blocking the intermediate space between the reveal of the breakthrough of the wall and in jacket covers of the pipelines; **characterized by** the following features:
8.2 an apparatus according to one of the features 1 to 7 is provided as an apparatus for blocking.

## Revendications

1. Dispositif destiné à isoler deux espaces de manière à assurer l'étanchéité aux liquides ou au gaz entre eux ;
1.1 avec un corps comprenant une première surface formant l'interface entre ce corps et un premier des deux espaces et une deuxième surface formant l'interface entre ce corps et le deuxième espace ;
1.2 le corps (1) est formé à partir d'un gel ;
**caractérisé par** les particularités suivantes :
1.3 au moins une partie d'au moins une des deux interfaces est formée à partir d'une peau (1.2, 1.3) ;
1.4 la peau (1.2, 1.3) est solidaire de la masse de gel ou issue de la masse de gel elle-même ou posée librement sur celle-ci.

2. Dispositif selon la revendication 1, **caractérisé en ce que** la peau (1.2, 1.3) comporte une élasticité qui est comprise entre la moitié et le double de l'élasticité de la masse de gel.

3. Dispositif selon la revendication 2, **caractérisé en ce que** l'élasticité de la peau (1.2, 1.3) est égale à 1 à 2 fois l'élasticité de la masse de gel.

4. Dispositif selon l'une quelconque des revendications 1 à 3, **caractérisé en ce que** la peau est une peau intrinsèque au gel qui est formée par traitement physique ou chimique de la surface d'un noyau de gel.

5. Dispositif selon l'une quelconque des revendications 1 à 3, **caractérisé en ce que** la peau (1.2, 1.3) est appliquée sur un noyau de gel (1.1).

6. Dispositif selon la revendication 5, **caractérisé en ce que** la peau est constituée d'une feuille.

7. Dispositif selon la revendication 5 ou 6, **caractérisé en ce que** la peau est réalisée en polyuréthane ou en une autre matière plastique.

8. Combinaison de branchement d'une maison permettant le passage d'au moins une conduite dans un percement pratiqué dans un mur et séparant deux espaces d'un bâtiment de manière à assurer l'étanchéité aux liquides ou au gaz entre eux ;
8.1 avec un dispositif d'isolement de l'espace compris entre l'intrados du percement dans le mur et les gaines des conduites ;
**caractérisé par** les particularités suivantes :
8.2 un dispositif selon l'une quelconque des particularités 1 à 7 est prévu comme dispositif d'isolement.
